# EUROPEAN PATENT SPECIFICATION

(11) **EP 3 070 032 B1**
(45) Date of publication and mention of the grant of the patent: **22.11.2017**
(21) Application number: 16161096.9
(22) Date of filing: 18.03.2016
(51) Int. Cl.: B65G 21/20

(54) **BENDABLE SIDE GUIDE DEVICE**
BIEGBARE SEITENFÜHRUNGSEINRICHTUNG
DISPOSITIF DE GUIDAGE LATÉRAL PLIABLE

(30) Priority: 18.03.2015 IT AN20150048
(43) Date of publication of application: 21.09.2016
(73) Proprietor: Movex S.p.A., 24060 Telgate (BG) (IT)
(72) Inventor: MARSETTI, Matteo, 24060 Telgate (BG) (IT)
(74) Representative: Kratter, Carlo

(56) References cited:
- EP-A1- 1 961 680
- EP-A2- 1 179 492
- US-A- 5 143 200

## Description

A bendable side guide device which is capable of maintaining the shape imposed by bending, in which the sliding surface is provided through a plurality of rotating bodies mounted to idle on axes that are parallel to each other is described below.

The guide device described below is used as a containment or guide device for objects transported by a conveyor for the bulk transport of objects.

For the purposes of this description the term "side guide device" includes guides having a sliding surface on just one side (such guides are also known as "single-side guides" or "unilateral guides" or also "guide rails").

For the purposes of this description the term "conveyor for the bulk transport of objects" includes chain conveyors, conveyor belts, modular conveyor belts, roller conveyors and any other device providing a plane of movement for objects which have to be transported.

In conveyors for the bulk transport of objects the use of side guides that ensure that the objects transported along a conveyor system are contained and/or routed is known.

Side guides define sliding surfaces, substantially and/or generally at right angles to the plane of movement of the conveyor, which extend along the desired direction of movement of the objects transported.

According to need, a side guide may extend along a path which may be a straight line, a simple polygonal chain, or a curve.

Such guides are in particular used in the curvilinear and bifurcating portions of conveyor lines and also on straight portions.

These guides are usually mounted in cantilever fashion through supporting bars which are in turn attached to the frame of the conveyor.

Side guides in which the sliding surface is provided through a plurality of rotating bodies mounted so as to idle on axes that are parallel to each other are in particular known; the rotating bodies used may for example be cylindrical rollers, spheres or rotational ellipsoids.

The use of side guides with sliding surfaces defined by idling rotating bodies reduces friction effects and allows the flow of objects to advance in a more regular fashion, limiting the risks of bridging at the front of the flow.

Single-side guide devices may be positioned on sections where the direction of flow of objects is maintained constant as well as on sections where the direction of flow of objects changes.

Two-side guide devices may for example be positioned at bifurcations in conveyor lines, that is to say where it is desired to divide a flow of objects into two separate flows.

More particularly straight side guides which can be permanently deformed so that they can be transformed into side guides running along an axis which is not straight, for example a curved axis, are more particularly known.

These straight guides which can be converted into curvilinear guides are particularly useful because they simplify stock management for the manufacturers of conveyor lines.

A first example of this type of side guide is described in patent document EP 1 340 698 (Rexnord Marbett) relating to a guide, in particular a single-side guide, which comprises a support consisting of a metal extrusion.

This extruded metal support has housings capable of receiving roller-bearing racks made of plastics, which have the characteristic of being flexible.

The metal support may be permanently bent so as to define a curvilinear profile and the roller-bearing racks, which are flexible, follow the curve imposed upon the metal section.

The metal support has a "T"-shaped channel (transverse to the plane of sliding) which can be engaged by the head of a bolt, for example a bolt with a non-standard head, to attach the guide to the frame of the conveyor.

The Italian company System Plast s.r.l. markets a side guide with idling rollers known as SpeedRail SB ®, which comprises a support made of an aluminium or PVC (polyvinylchloride) extrusion having a first side on which there is defined a housing capable of receiving a roller-bearing rack made of plastics and a second side which has a "T"-shaped channel that is capable of being engaged by the head of a bolt, for example a bolt with a non-standard head, which is connected to the conveyor frame.

The support may be bent so as to impose a curvilinear profile upon it and the roller-bearing rack, which is flexible, follows the curvature imposed upon the support.

Patent document EP 1 961 680 A1 (Rexnord Marbett) describes a side guide device for conveyors comprising a double "C" metal section which houses roller-bearing racks, this document discloses a side guide device according to the preamble of claim 1. On the dorsal part of the double "C" section there is a dovetail section which is attached to a generically "C"-shaped bracket.

The side guide described in EP 1 961 680 comprises a support extending in a longitudinal direction and made of metal, for example steel or aluminium. The support can be deformed plastically in such a way that it is able to define a curvilinear portion of the side guide at a curved section of the conveyor line.

The support in EP 1 961 680 does not however comprise a cavity specifically intended to receive a metal section intended to maintain the curved profile of the support.

The known art described above also has a number of disadvantages.

For example it has been felt necessary to reduce the costs of manufacturing side guides while maintaining high product quality and without reducing the service life of the guides.

Another object is that of ensuring sufficient robustness to allow the guide to withstand the stresses exerted by the articles transported.

Another object is to obtain a guide which can be readily attached to the conveyor frame.

Yet another object is to obtain a mechanical connection between the guide and the conveyor frame which is mechanically very strong and can be simply and quickly assembled.

Yet another object is to have a smaller number of components that have to be managed and moved, to simplify the management of logistics.

The inventor's object is to overcome the problems of the known art, at least in part, and in particular the problems indicated above.

This object is accomplished through a side guide device for conveyors according to the contents of claim 1.

Further advantages may be achieved through the supplementary characteristics in the dependent claims.

One possible embodiment of the guide device will be described below with reference to the appended drawings in which:
- Figure 1 is a perspective view of a guide device, with an axis extending in a straight line;

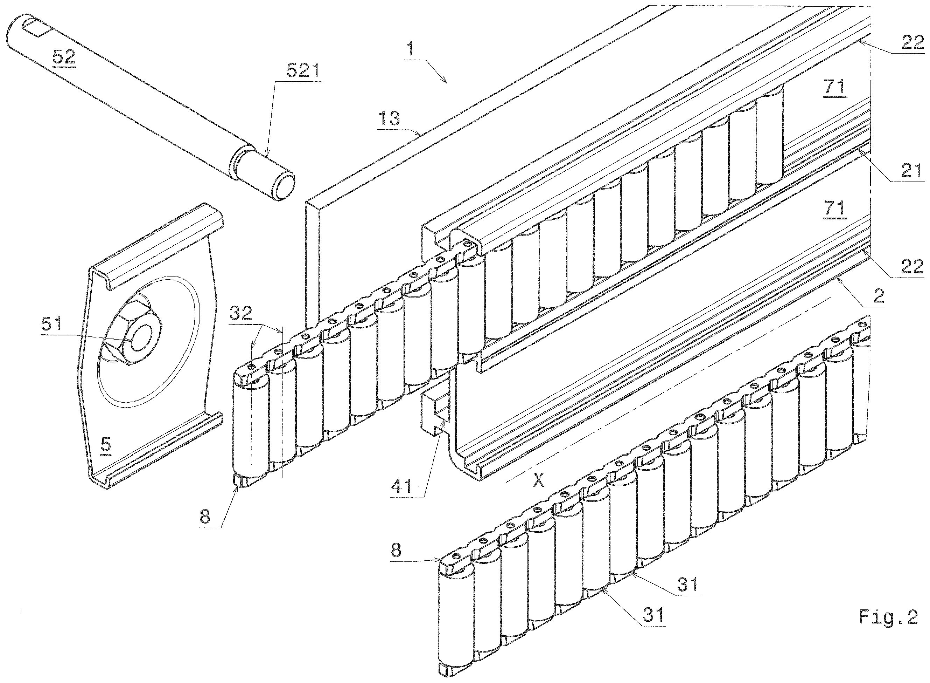

- Figure 2 is an exploded view of the device in Figure 1;
- Figure 3 is a perspective view of the guide device in Figure 1 but with an axis extending in a curve;
- Figure 4 is an exploded view of the device in Figure 3; and
- Figure 5 is a side view of the device in Figure 1.

With reference to the numbering used in the appended plates of drawings number 1 indicates as a whole a side guide device for conveyors comprising a support 2 and extending along an axis X.

Support 2 is a section of non-metal material having a transverse cross-section that is substantially and/or generally constant.

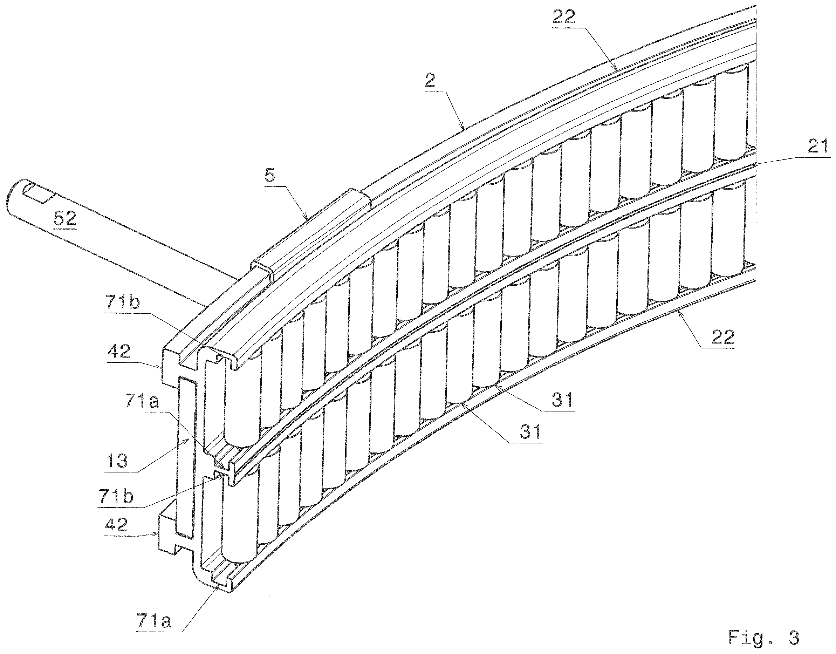

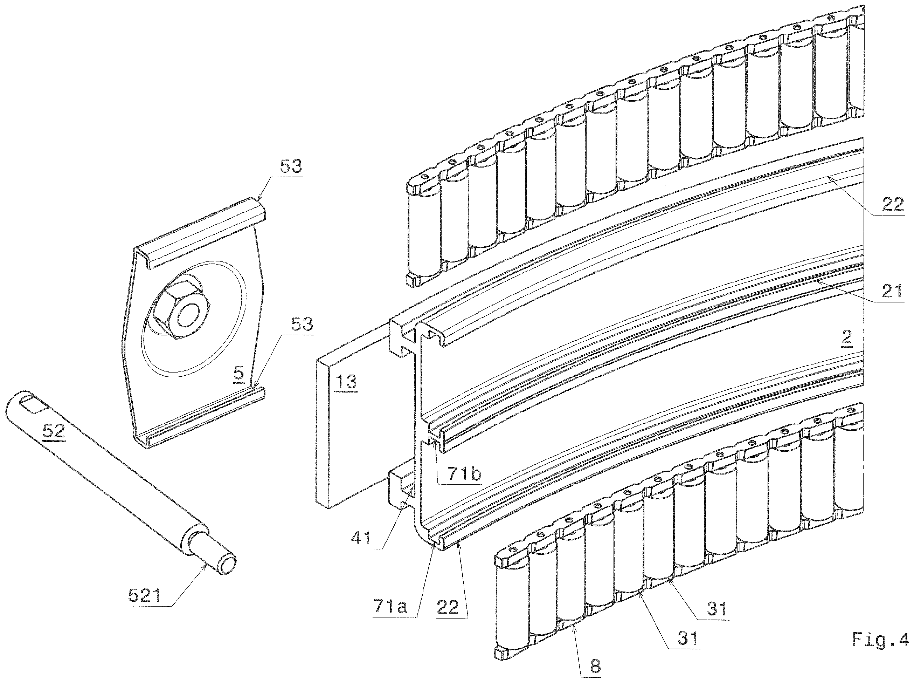

Support 2 is bendable. For the purposes of this invention the term "bendable" means that the support is capable of being curved in such a way as to adopt the configuration illustrated in Figures 3 and 4 in which support 2 has a longitudinal axis X that is curved

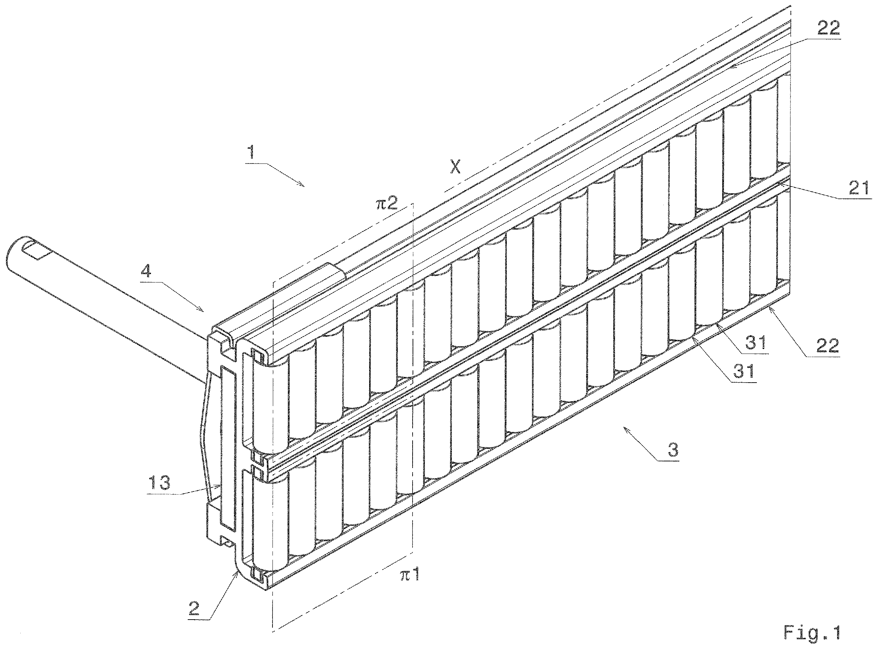

Support 2 comprises a first side 3 on which there is at least one sliding surface π1, π2 comprised in a plane of sliding indicated by a dashed line in Figure 1.

In the example illustrated, on the first side 3 of support 2 there are two sliding surfaces π1, π2 which are coplanar with each other and extend along the X axis.

The two sliding surfaces π1, π2, which overlap each other vertically, make it possible to produce a side guide device 1 which is also suitable for transporting tall objects, such as for example bottles.

Each sliding surface π1, π2 is defined by a plurality of rotating bodies 31, mounted so as to idle on a plurality of axes 32, which are substantially parallel to each other.

Support 2 is suitably shaped so as to define the aforesaid sliding surfaces π1, π2. Support 2 comprises a median rib 21 which separates the two sliding surfaces π1, π2.

In the example illustrated rotating bodies 31 are cylinders; of course in other versions not illustrated the rotating bodies may also be of another shape, for example they may be rotational ellipsoids.

Rotating bodies 31 may be mounted on roller-bearing frames 8, which are also known as racks 8.

Racks 8 are in turn inserted into two cavities 71 extending parallel to each other in a longitudinal direction provided in the first side 3 of support 2.

In a transverse direction substantially at right angles to the longitudinal direction each cavity 71 is bounded by median rib 21 on the one hand and an end rib 22 on the other.

Each cavity 71 in support 2 has a pair of opposing channels 71a, 71b that are parallel to each other and extend along the X axis. Opposing channels 71a, 71b thus act together to support and hold racks 8 and therefore rotating bodies 31 in position.

Opposing channels 71a, 71b are provided in median rib 21 and/or end ribs 22 in such a way that they face each other from opposite sides of cavity 71.

Support 2 has a second side 4 opposite first side 3 which can be engaged by at least a pair of brackets 5 (also known commercially as "clamps") which are for example made of a suitable metal material.

In the embodiment illustrated each bracket 5 has a threaded hole 51 which receives a rod 52 with a threaded end 521.

This solution makes it possible to attach guide device 1 to the frame of the conveyor with greater mechanical stability than in other known techniques such as document EP 1 340 698 which provide for the use of bolts whose heads are inserted in channels made in the guide support.

In the embodiment described support 2 is made of a material based on a thermoplastic polymer.

It will be noted that side guide device 1 according to the invention may comprise two sliding surfaces π1, π2 thanks to the fact that support 2 is made of a thermoplastic polymer. In fact the shape of support 2 described above, that is comprising median rib 21 and the two end ribs 22, all of them comprising the aforesaid channels 71a, 71b, is a complex shape which would be complicated and costly to make in a material other than the abovementioned thermoplastic polymer, such as for example aluminium or steel.

Second side 4 of support 2 has a seat or cavity 41, which also extends along the X axis.

Seat 41 is intended to receive reinforcing means 13, for example a metal section made of a material having plastic behaviour. Reinforcing means 13 may for example be shaped as a bar or section having a rectangular transverse cross-section and acting as a reinforcing core for support 2.

Support 2 is made of a deformable material - as mentioned - based on a thermoplastic polymer having plastic behaviour and contains a plastically deformable core 13.

Thanks to these two characteristics, although support 2 starts with a straight axis X, it can be easily bent as desired, for example in such a way as to cause the X axis to adopt a curvilinear profile, and once bent support 2 stably maintains the desired shape as a result of the presence of core 13.

In particular it is possible to impose a minimum radius of curvature of 400-500 mm on support 2. It will be noted that in some embodiments it is possible to impose an even smaller minimum radius of curvature, for example 240 mm, on support 2.

In particular the thermoplastic polymer used to produce support 2 may be polyethylene; even more particularly support 2 may be made of polyethylene having a high molecular weight. The core 13 is made of metal, for example steel.

The steel used to make core 13 preferably has a carbon content of less than 0.40%.

This solution makes it possible to produce guides at lower cost than in the known art in which the structure of the guide is made from an aluminium section.

It is pointed out that guide device 1 may be marketed without metal core 13, which may be inserted into support 2 subsequently, before assembly in the conveyor line.

As mentioned, in the embodiment illustrated first side 3 of support 2 of device 1 has two cavities 71 which are parallel with each other and which extend along the X axis.

Both cavities 71 house a plurality of rotating bodies 31 mounted to idle on axes 32 which are parallel to each other and substantially at right angles to the X axis.

In an alternative embodiment which is not illustrated there is a single cavity on first side 3 of support 2 to receive the rotating bodies.

In further embodiments which are not illustrated there may also be three or more cavities parallel to each other, each of which may house a plurality of idling rotating bodies, on first side 3 of support 2.

As mentioned, in the embodiment illustrated each cavity 71 in support 2 has a pair of opposing channels 71a, 71b (running along the X axis) designed for insertion of the opposite ends of racks 8 which rotatably support idling rotating bodies 31.

It will be noted that roller-bearing racks 8 may be constructed in a conventional way, for example in accordance with what is described in document EP 1 340 698 or document EP 1 345 824.

Typically the racks and the rotating bodies supported by the racks are made of acetal resin.

In the embodiment illustrated second side 4 of section 2 has two prominences 42 which have undercuts.

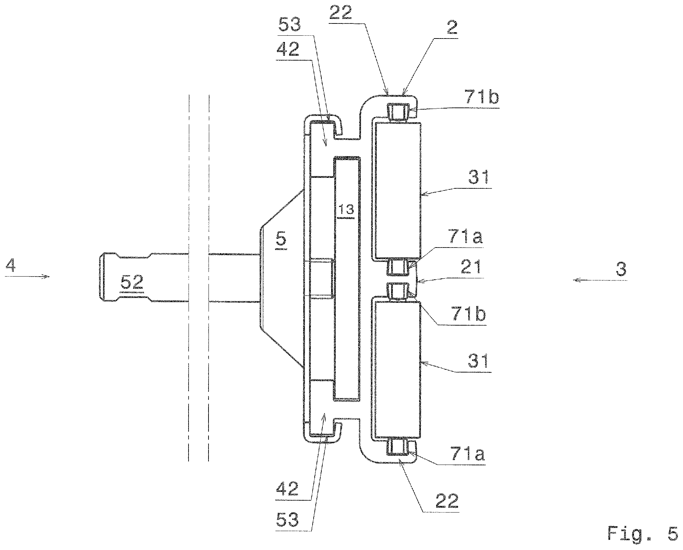

The two prominences 42 are capable of being engaged by the ends 53 of metal brackets 5 through an interference fit. According to the invention, the two prominences 42 have a transverse cross-section which is substantially and/or generally "T"-shaped and can be engaged by the ends 53 of metal brackets 5. The two prominences 42 are each externally engaged by a corresponding end 53 of metal bracket 5, as may more clearly be seen in Figure 5.

The greater the distance between the two prominences 42 the greater the mechanical stability of the attachment of guide device 1 to the frame of the conveyor.

The two prominences 42 act together to define a seat 41 which is capable of receiving a conventional metal section 13, in the example illustrated a flat section of mild steel. In particular the two prominences 42 define the seat 41 located on an inner side opposite the outer side intended to be engaged by metal bracket 5.

It will be noted that the "T"-shape of prominences 42 makes it possible to make a high strength mechanical connection between side guide device 1 and the frame of the conveyor. In addition to this, "T"-shaped prominences 42 allow the operator to mount metal brackets 5 on prominences 42 easily and quickly.

Steel plate 13 may have a transverse dimension of between 4 mm x 20 mm and 8 mm x 60 mm. In a preferred embodiment steel plate 13 has a thickness of 6 mm and a width of 60 mm.

Rod 52 is screwed into threaded hole 51 until it touches the surface of metal section 13 so as to immobilise movement of the clamps.

Support 2 may be bent for example using a three roll calender.

The process of bending support 2 may take place at ambient temperature.

## Claims

1. A side guide device (1) capable of forming straight or curved guide sections for conveyors, comprising
a support (2) extending along an axis (X), the said support (2) having a substantially and/or generally constant transverse cross-section and being bendable;
the said support (2) having a first side (3) on which there is at least one sliding surface (π1, π2), the said sliding surface (π1, π2) being defined by a plurality of rotating bodies (31) mounted so as to idle on a plurality of axes (32) that are substantially parallel to each other;
said support (2) comprising a second side (4) opposite the said first side (3) capable of being engaged by at least two brackets (5);
said support (2) being made from a material based on thermoplastic polymer;
said second side (4) of said support (2) comprising a seat (41) extending along the said axis (X) capable of receiving a reinforcing metal section (13);
said device (1) being **characterised in that** the said second side (4) of the said support (2) comprises two prominences (42) capable of being engaged by the said brackets (5) and defining the said seat (41) intended to receive the said metal section (13), in which the said two prominences (42) have a substantially and/or generally "T"-shaped transverse cross-section.

2. A side guide device (1) according to claim 1, wherein the metal section (13), is a flat mild steel section inserted into the said seat (41).

3. A side guide device (1) according to claim 1, in which
- the said first side (3) of the said support (2) comprises at least one cavity (71) extending along the said axis (X);
- the said cavity (71) housing a plurality of the said idling rotating bodies (31).

4. A side guide device (1) according to claim 3, in which
- the said cavity (71) has a pair of opposing channels (71a, 71b) extending along the said axis (X);
- in each pair of opposing channels (71a, 71b) of each cavity (71) there is inserted at least one end of a rack (8) which carries the said idling rotating bodes (31).

5. A side guide device (1) according to any one of the preceding claims, in which there are two sliding surfaces (π1, π2) that are coplanar and extend along the X axis on the said first side (3) of the said support (2).

6. A side guide device (1) according to claim 5, in which the said support (2) comprises a median rib (21) which separates the said two sliding surfaces (π1, π2).

7. A side guide device (1) according to claim 6, when claim 5 depends on claim 4, in which each cavity (71) is bounded in a transverse direction substantially at right angles to the longitudinal direction by the said median rib (21) on the one hand and by an end rib (22) on the other.

8. A side guide device (1) according to claim 7, in which the said opposing channels (71a, 71b) are provided in the said median rib (21) and/or in the said end rib (22) in such a way that they face each other from opposite sides of the said cavity (71).

9. A side guide device (1) according to any one of the preceding claims, in which the thermoplastic polymer used to produce the said support (2) is polyethylene, in particular high molecular weight polyethylene.

10. A side guide device (1) according to any one of the preceding claims, in which the said metal section (13) is made of steel having a carbon content of less than 0.40%.

## Patentansprüche

1. Seitenführungseinrichtung (1), die in der Lage ist, gerade oder gekrümmte Führungsabschnitte für Förderer zu bilden, umfassend
einen entlang einer Achse (X) verlaufenden Träger (2), wobei der gennannte Träger (2) einen wesentlich und/oder allgemein konstanten Querschnitt hat und biegbar ist;
wobei der genannte Träger (2) eine erste Seite (3) hat, woran es mindestens eine Gleitfläche (π1, n2) gibt, wobei die Gleitfläche (π1, n2) durch eine Vielzahl von Drehkörpern (31) definiert ist, die derart gelagert sind, dass sie auf eine Vielzahl von grundsätzlich parallel zueinander verlaufenden Achsen (32) leer laufen;
wobei der genannte Träger (2) eine zweite, der ersten Seite (3) gegenüberliegenden Seite (4) umfasst, die mit mindestens zwei Halterungen (5) in Eingriff steht;
wobei der genannte Träger (2) aus einem thermoplastischen Polymer-basierten Werkstoff besteht;
wobei die genannte zweite Seite (4) des genannten Trägers (2) einen entlang der genannten Achse (X) verlaufenden Sitz (41) umfasst, der einen verstärkenden Metallabschnitt (13) aufnehmen kann; wobei die genannte Einrichtung (1) **dadurch gekennzeichnet ist, dass** die genannte zweite Seite (4) des genannten Trägers (2) zwei Vorsprünge (42) umfasst, die mit den genannten Halterungen (5) in Eingriff stehen und die den genannten Metallabschnitt (13) aufzunehmenden Sitz (41) bestimmen, worin die genannten zwei Vorsprünge (42) einen wesentlich und/oder allgemein "T"-förmigen Querschnitt haben.

2. Seitenführungseinrichtung (1) nach Anspruch 1, worin der Metallabschnitt (13) aus einem ebenen, in den genannten Sitz (41) eingesteckten Abschnitt aus Weichstahl besteht.

3. Seitenführungseinrichtung (1) nach Anspruch 1, worin
- die genannte erste Seite (3) des genannten Trägers (2) mindestens eine entlang der genannten Achse (X) verlaufenden Kavität (71) umfasst;
- die genannte Kavität (71) eine Vielzahl von den genannten leer laufenden Drehkörpern (31) aufnimmt.

4. Seitenführungseinrichtung (1) nach Anspruch 3, worin
- die genannte Kavität (71) ein Paar von entlang der genannten Achse (X) verlaufenden, gegenüberliegenden Kanäle (71 a, 71 b) aufweist;
- mindestens ein Ende einer die leer laufenden Drehkörper (31) tragenden Gestell (8) in jedem Paar von gegenüberliegenden Kanäle (71 a, 71 b) jeder Kavität (71) eingesteckt ist.

5. Seitenführungseinrichtung (1) nach irgendeinem der vorangegangenen Ansprüche, worin es zwei Gleitflächen (π1, π2) gibt, die koplanar sind und die entlang der Achse X an der genannten Seite (3) des genannten Trägers (2) verlaufen.

6. Seitenführungseinrichtung (1) nach Anspruch 5, worin der genannte Träger (2) eine mittige Rippe (21) umfasst, die die genannten zwei Gleitflächen (π1, π2) trennt.

7. Seitenführungseinrichtung (1) nach Anspruch 6, wenn Anspruch 5 von Anspruch 4 abhängt, worin jede Kavität (71) in einer wesentlich orthogonal zu der Längsrichtung verlaufenden Querrichtung einerseits durch die genannte mittige Rippe (21) und andererseits durch eine Endrippe (22) begrenzt wird.

8. Seitenführungseinrichtung (1) nach Anspruch 7, worin die genannten gegenüberliegenden Kanäle (71 a, 71 b) in der genannten mittige Rippe (21) und/oder in der genannten Endrippe (22) derart angeordnet sind, dass sie aus gegenüberliegenden Seiten der genannten Kavität (71) einander zugewandt sind.

9. Seitenführungseinrichtung (1) nach irgendeinem der vorangegangenen Ansprüche, worin das zur Herstellung des genannten Trägers (2) benutzte thermoplastische Polymer aus Polyethylen, insbesondere hochmolekularem Polyethylen, besteht.

10. Seitenführungseinrichtung (1) nach irgendeinem der vorangegangenen Ansprüche, worin der genannte Metallabschnitt (13) aus Stahl mit weniger als 0,40% Kohlenstoffgehalt besteht.

## Revendications

1. Dispositif de guidage latéral (1) en mesure de former des sections de guidage linéaires ou courbées pour des transporteurs, comprenant
un support (2) s'étendant le long d'un axe (X), ledit support (2) ayant une section transversale substantiellement et/ou généralement constante et étant pliable ;
ledit support (2) ayant un premier côté (3) sur lequel il y a au moins une surface de glissement (π1, π2), ladite surface de glissement (π1, π2) étant définie par une pluralité de corps rotatifs (31) montés de sorte à tourner au ralenti sur une pluralité d'axes (32) substantiellement parallèles l'un de l'autre ;
ledit support (2) comprenant un second côté (4) opposé audit premier côté (3), en mesure d'être enclenché par au moins deux étriers (5) ;
ledit support (2) étant réalisé en un matériau à base de polymère thermoplastique ;
ledit second côté (4) dudit support (2) comprenant un siège (41) s'étendant le long dudit axe (X) en mesure de recevoir une section métallique de renforcement (13) ;
ledit dispositif (1) étant **caractérisé en ce que** ledit second côté (4) dudit support (2) comprend deux protubérances (42) en mesure d'être enclenchées par lesdits étriers (5) et définissant ledit siège (41) visant à recevoir ladite section métallique (13), où lesdites deux protubérances (42) ont une section transversale substantiellement et/ou généralement en forme de "T".

2. Dispositif de guidage latéral (1) selon la revendication 1, où la section métallique (13) est une section plate en acier doux introduite dans ledit siège (41).

3. Dispositif de guidage latéral (1) selon la revendication 1, où
- ledit premier côté (3) dudit support (2) comprend au moins une cavité (71) s'étendant le long dudit axe (X) ;
- ladite cavité (71) logeant une pluralité desdits corps rotatifs tournant au ralenti (31).

4. Dispositif de guidage latéral (1) selon la revendication 3, où
- ladite cavité (71) a une paire de canaux opposés (71 a, 71 b) s'étendant le long dudit axe (X) ;
- dans chaque paire de canaux opposés (71 a, 71 b) de chaque cavité (71) est introduite au moins une extrémité d'une crémaillère (8) portant lesdits corps rotatifs tournant au ralenti (31).

5. Dispositif de guidage latéral (1) selon l'une quelconque des revendications précédentes, où il y a deux surfaces de glissement (π1, π2) qui sont coplanaires et qui s'étendent le long de l'axe X sur ledit premier côté (3) dudit support (2).

6. Dispositif de guidage latéral (1) selon la revendication 5, où ledit support (2) comprend une nervure médiane (21) qui sépare lesdites deux surfaces de glissement (π1, π2).

7. Dispositif de guidage latéral (1) selon la revendication 6, lorsque la revendication 5 dépend de la revendication 4, où chaque cavité (71) est délimitée dans une direction transversale substantiellement perpendiculaire à la direction longitudinale d'une part par lesdites nervures médianes (21) et d'autre part par une nervure d'extrémité (22).

8. Dispositif de guidage latéral (1) selon la revendication 7, où lesdits canaux opposés (71 a, 71 b) sont prévus dans ladite nervure médiane et/ou dans la dite nervure d'extrémité (22) de sorte qu'ils se font mutuellement face à partir de côtés opposés de ladite cavité (71).

9. Dispositif de guidage latéral (1) selon l'une quelconque des revendications précédentes, où le polymère thermoplastique utilisé pour fabriquer ledit support (2) est polyéthylène, en particulier polyéthylène à haut poids moléculaire.

10. Dispositif de guidage latéral (1) selon l'une quelconque des revendications précédentes, où ladite section métallique (13) est réalisée en acier ayant un contenu de carbone inférieur à 0,40%.
